# EUROPEAN PATENT APPLICATION

(11) **EP 2 458 507 A1**
(43) Date of publication of application: **30.05.2012**
(21) Application number: 10801929.0
(22) Date of filing: 30.06.2010
(51) Int. Cl.: G06F 12/14

(54) **STORAGE DEVICE, ACCESS CONTROLLING SYSTEM, SD CARD AND DATA ACCESS CONTROLLING METHOD**

(30) Priority: 22.07.2009 CN 200910109027
(71) Applicant: Shenzhen Netcom Electronics Co., Ltd, Shenzhen, Guangdong 518057 (CN)
(72) Inventor: YANG, Tianzhu, Guangdong 518057 (CN); LI, Zhixiong, Guangdong 518057 (CN)
(74) Representative: Michalski Hüttermann & Partner
(86) International application number: PCT/CN2010/074846
(87) International publication number: WO 2011/009370

(57) **Abstract**

The present disclosure relates to smart card technology, and provides a SD card and a data access control method thereof. The SD card includes an interface module, a control module, and a storage module including a public storage unit and a private storage unit. The control module includes a SD card direct access unit for controlling an external device to access the public storage unit, a storage isolating firmware unit for stopping the external device from unauthorized accessing the private storage unit, and a virtual machine operating system unit for installing some applications according to the requirements of user, and perform the application in a protected mode combined with the storage isolating firmware unit. The present disclosure can guarantee conveniency of accession and stored of large capacity SD data, and installs some applications according to the requirements, performs the applications, storeds and accesses the data in a protected mode.

## Description

### BACKGROUND

1. Technical Field

The present disclosure relates to smart card technology, and particularly, to a storage device, a access control system of storage device, a SD card and a data access control method of the SD card.

2. Discussion of Related Art

A SD Card (Secure Digital Memory Card) is a flash memory device based on a new generation of semiconductor memory devices, it is widely used in portable devices such as digital cameras, personal digital assistant (PDA) and multimedia players. SD Cards are jointly developed by Panasonic, Toshiba and SanDisk Corporation, have a high memory capacity, fast data transfer rate, great flexibility and good mobile security.

Structures of SD card can guarantee security of digital file transfer, and are very easy to reformat. Therefore, it has a wide range of applications, for example, music, movies, news and other multimedia files can be easily saved to the SD card.

Storage devices such as SD card typically include an interface module, a control module, and a storage module. When the SD card is connected to an external device via the interface module, the external device can directly access data stored in the SD card. Therefore, anyone can directly access data stored in the SD card by an external device compatible with the SD card, and can not perform applications according to the requirements of user, such that the data stored in the SD card can not keep confidentiality.

Therefore, a SD card is desired in order to overcome the above-described shortcomings.

### SUMMARY OF THE INVETION

In one aspect, a SD card according to a preferred embodiment includes an interface module, a storage module, and a control module. The storage module includes a public storage unit for storing data without keeping secret and a private storage unit for storing data kept secret. The control module is connected to the storage module and the interface module. The control module includes a SD card direct access unit, a storage isolating firmware unit, and a virtual machine operating system unit. The SD card direct access unit controlls an external device to access data stored in the public storage unit. The storage isolating firmware unit stops the external device from unauthorized accessing the private storage unit. The virtual machine operating system unit installs some applications according to the requirements of user, and performs the applications in a protected mode combined with the storage isolating firmware unit.

In another aspect, a data access control method of SD card according to a preferred embodiment includes step of: when the control module receiving an instruction of the external device accessing data stored in the private storage unit of the storage module by the application, the virtual machine operating system unit combined with the storage isolating firmware unit authenticates the instruction; if the instruction is passed authentication, the external device will be allowed to access the private storage unit; otherwise, the external device is not allowed to access the private storage unit.

In another aspect, a storage device according to a preferred embodiment includes an interface module, a storage module, and a control module. The storage module includes a public storage unit for storing data without keeping secret and a private storage unit for storing data kept secret. The control module is connected to the storage module and the interface module. The control module includes a direct access unit, a storage isolating firmware unit, and a virtual machine operating system unit. The direct access unit controlls an external device to access data stored in the public storage unit. The storage isolating firmware unit stops the external device from unauthorized accessing the private storage unit. The virtual machine operating system unit installs some applications according to the requirements of user, and performs the application in a protected mode combined with the storage isolating firmware unit.

In another aspect, an access control system of storage device according to a preferred embodiment includes a storage device and a host device. The storage device includes an interface module, a storage module, and a control module. The storage module includes a public storage unit for storing data without keeping secret, and a private storage unit for storing data kept secret. The control module is connected to the storage module and the interface module. The control module includes a direct access unit, a storage isolating firmware unit, and a virtual machine operating system unit. The direct access unit controlls an external device to access data stored in the public storage unit. The storage isolating firmware unit stops the external device from unauthorized accessing the private storage unit. The virtual machine operating system unit installs some applications according to the requirements of user, and performs the application in a protected mode combined with the storage isolating firmware unit. The host device is connected to the interface module, and displays two work interfaces of the storage device. The two work interfaces are a direct access work interface used for accessing data of the public storage unit and a virtual machine operating system work interface used for accessing data of private storage unit. The host device sends an instruction of accessing data stored in the private stored to the storage device by the virtual machine operating system work interface, the virtual machine operating system unit combined with the storage isolating firmware unit authenticates the instruction; if the instruction is passed authentication, the host device will be allowed to access the private storage unit; otherwise, the host device is not allowed to access the private storage unit.

In the present disclosure, the storage module is divided into a public storage unit and a private storage unit. The storage isolating firmware unit stopes an external device from unauthorized accessing the private storage unit, and allows the external device to access the private storage unit via an authentication. Therefore, the disclosure can guarantee conveniency of accession and stored of large capacity SD data, and installs some applications according to the requirements of user, performs the applications, storeds and accesses the data in a protected mode.

Other advantages and novel features will become more apparent from the following detailed description of various embodiments, when taken in conjunction with the accompanying drawings.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout several views, and all the views are schematic.

FIG 1 is a schematic block diagram of one embodiment of a storage device.

FIG 2 is a schematic block diagram of another embodiment of a storage device.

FIG 3 is a flowchart of a data access control method of SD card.

FIG 4 is a schematic block diagram of one embodiment of an access control system of storage device.

### DETAILED DESCRIPTION OF THE PREFERRED EMBODIMENTS

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In the fllowing embodiments, the mentioned storage module is divided into a public storage unit and a private storage unit. The mentioned storage isolating firmware unit stops an external device from unauthorized accessing the private storage unit, and allows the external device to access the private storage unit via an authentication. Therefore, the disclosure can guarantee conveniency of accession and stored of large capacity SD data, and installs some applications according to requirments of users, performs the applications, storeds and accesses the data in a protected mode.

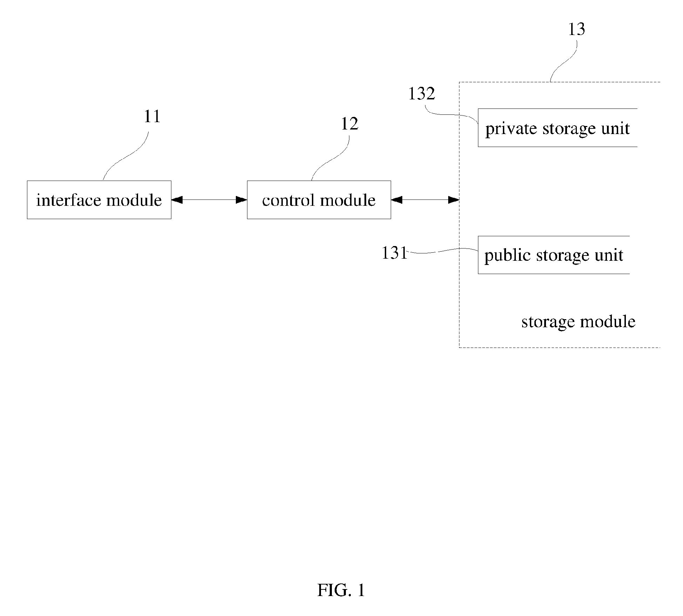

Referring to FIG 1, a storage device in accordance with a preferred embodiment of the present disclosure is partially shown. The storage device includes an interface module 11, a control module 12, and a storage module 13. The control module 12 is connected to the storage module 13 and the interface module 11. The storage module 13 is Nand Flash, and is used for providing a data stored space. The storage module 13 includes a public storage unit 131 and a private storage unit 132. Data stored in the public storage unit 131 don't need keeping secret. Any external devices being compatible with the storage device can freely access the data stored in the public storage unit 131. Data stored in the private storage unit 132 need keeping secret. The external device only accesses the data stored in the private storage unit 132 via passing authentication.

The control module 12 controlls the external device to access the storage module 13. The control module 12 includes a direct access unit 121, a virtual machine operating system unit 122, and a storage isolating firmware unit 123. The direct access unit 121 corresponds to a direct access work interface of the external device. When the external device accesses the data stored in the public storage unit 13 1, the direct access unit 121 will be triggered by the direct access work interface, such that users can access freely the data stored in the public storage unit 131. The virtual machine operating system unit 122 corresponds to a virtual machine operating system work interface. The storage isolating firmware unit 123 is used for stopping the external device from unauthorized accessing the private storage unit 132. The virtual machine operating system unit 122 combined with the storage isolating firmware unit 123 performs applications in a protected mode, and users can only access the data stored in the private storage unit 132 via passing authentication. The interface module 11 provides an interconnection between the external device and the SD card.

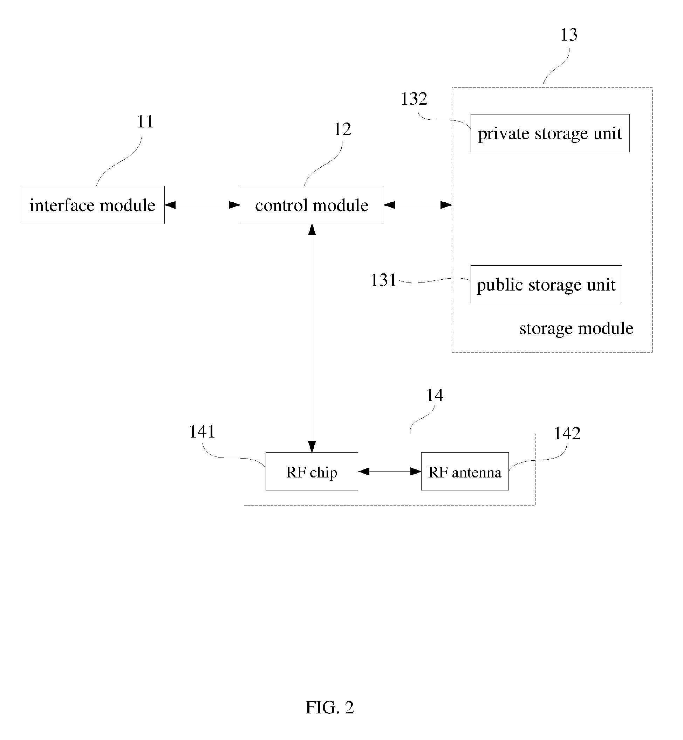

Referring to FIG 2, in a prefered embodiment, the storage device further includes a RF communication module 14 electrically connected to the control module 12. The RF communication module 14 includes a RF chip 141 electrically connected to the control module and a RF antenna 142 electrically connected to the RF chip 141. The RF communication module 14 processes radio frequency protocol in control of the control module 12 and communicates an external contactless device in wireless. The RF communication module 14 is a 2.4G RF communication module or a 13.56M RF communication module.

In a preferred embodiment, the storage device is SD card.

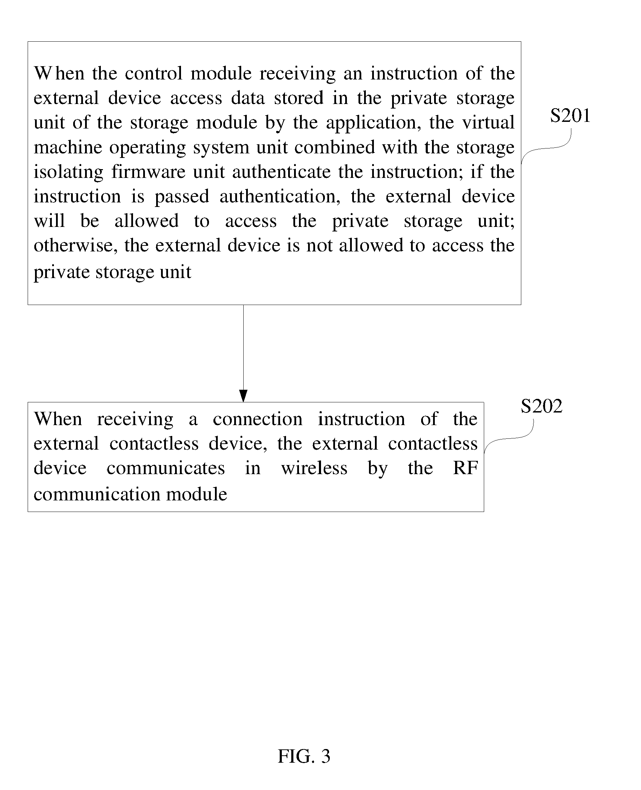

Referring to FIG3, a data access control method of SD card in accordance with a preferred embodiment of the present disclosure is shown. The data access control method of SD card is described as the following.

In step 201, when the control module receiving an instruction of the external device access data stored in the private storage unit of the storage module by the application, the virtual machine operating system unit combined with the storage isolating firmware unit authenticate the instruction; if the instruction is passed authentication, the external device will be allowed to access the private storage unit; otherwise, the external device is not allowed to access the private storage unit.

In an embodiment of the disclosure, when the SD card is connected to the external device, the external device displays two work interfaces. The two work interfaces are a SD direct access work interface and a virtual machine operating system work interface. The external device can access the data of the public storage unit by the SD direct access work interface. The applications can be installed in the virtual machine operating system unit according to the requirements of users. Operating area of the applications corresponds to the private storage unit of SD card. When the external device accessing the private storage unit by the applications, and is authenticated by the storage isolating firmware unit firstly; if being pass authentication, the external device is allowed to access the private storage unit; otherwise, the external device is not allowed to access the private storage unit.

The detail of the aboved method is described as: the control module of SD card judges an access instruction inputted in the external device, if user accesses the SD card via the SD direct access work interface, the SD direct access unit of the control module can directly access the data stored in the public storage unit without keeping secret. If user accesses the SD card by the application installed via the virtual machine operating system work interface, the data stored in the private storage unit need keeping secret, the virtual machine operating system unit combined with the storage isolating firmware unit perform the application in a protected mode; if the instruction being pass authentication, user is allowed to access the private storage unit.

Before the external device accesses the SD card, the storage module is divided into the public storage unit and the private storage unit beforehand. The data stored in the public storage unit don't need keeping secret. Any external devices being compatible with the storage device can freely access the data stored in the public storage unit. The data stored in the private storage unit need keeping secret. The storage isolating firmware unit stops the external device from unauthorized accessing the private storage unit. The external device only accesses the data stored in the private storage unit via passing authentication.

In this embodiment, the virtual machine operating system unit installs the application in isolation state, thereby the application protects the data stored in the private storage unit of the SD card, such that the private storage unit of the SD card can only written, read and modified by authorized, no matter what kind of card reading devices, operating systems, applications can not access data stored in private storage unit without authentication. The storage module of SD card has a private storage unit is equal to a firewall. Therefore, the SD card as described in the disclosure can support encryption and decryption, and provides a function of USB key role.

In step S202, when receiving a connection instruction of the external contactless device, the external contactless device communicates in wireless by the RF communication module.

In an embodiment, when receiving a connection instruction of the external contactless device, the SD card communicating the external contactless device in wireless by the RF communication module.

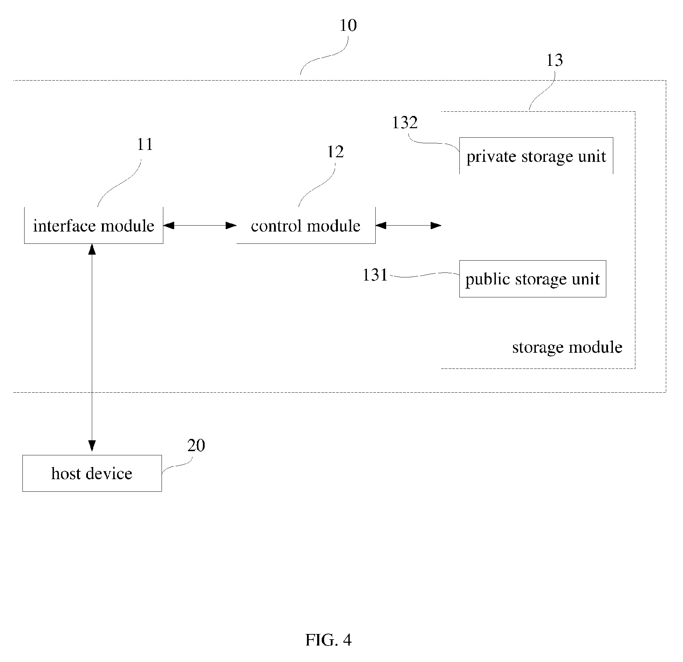

Referring to FIG4, a preferred embodiment of access control system of storage device includes a storage device10 and a host device 20. The storage device 10 includes an interface module 11, a control module 12, and a storage module 13. The host device 20 maybe an external device, including computers, personal digital assistants, mobile communication terminals or digital cameras. The work process of the control module 12, the interface module 11 and the storage module 13 is described as mentioned above, this will not repeat them.

Referring to FIG2, in an embodiment, the storage device 10 further includes a RF communication module 14 for processing radio frequency protocol in control of the control module 12 and communicating an external contactless device in wireless. The work process of RF communication module 14 is described as mentioned above, this will not repeat it.

In the mentioned above embodiments, the mentioned storage module is divided into a public storage unit and a private storage unit. The mentioned storage isolating firmware unit stops an external device from unauthorized accessing the private storage unit, and allows the external device to access the private storage unit via an authentication. Therefore, the present disclosure can guarantee conveniency of accession and stored of large capacity SD data, and installs some applications according to the requirements of users, performs the applications, storeds and accesses the data in a protected mode. The virtual machine operating system unit of SD card can install some applications according to the requirements of user, such that the SD card is conveniently used. Furthermore, the SD card has a RF communication module 14 to communicate the external contactless device in wireless, such that the SD card can be used widely.

Finally, while various embodiments have been described and illustrated, the invention is not to be construed as being limited thereto. Various modifications can be made to the embodiments by those skilled in the art without departing from the true spirit and scope of the invention as defined by the appended claims.

## Claims

1. A SD card, comprising:
an interface module;
a storage module comprising:
a public storage unit for storing data without keeping secret;
a private storage unit for storing data kept secret;
a control module connected to the storage module and the interface module, comprising:
a SD card direct access unit for controlling an external device to access data stored in the public storage unit;
a storage isolating firmware unit for stopping the external device from unauthorized accessing the private storage unit; and
a virtual machine operating system unit for installing some applications according to the requirements of user, and performing the applications in a protected mode combined with the storage isolating firmware unit.

2. The SD card of claim 1, wherein the storage module is a Nand Flash.

3. The SD card of claim 1, further comprising a RF communication module connected to the contol module, processing radio frequency protocol in control of the control module and communicating with an external contactless device in wireless.

4. The SD card of claim 3, wherein the RF communication module is a 2.4G RF communication module or a 13.56M RF communication module.

5. The SD card of claim 4, wherein the RF communication module comprises:
a RF chip connected to the control module and processing the radio frequency protocol; and
a RF antenna connected to the RF chip and communicating with the external contactless device in wireless.

6. A data access control method of SD card of one of claim 1-5, comprising:
when the control module receiving an instruction of the external device accessing data stored in the private storage unit of the storage module by the application, the virtual machine operating system unit combined with the storage isolating firmware unit authenticate the instruction; if the instruction being passed authentication, the external device is allowed to access the private storage unit; otherwise, the external device is not allowed to access the private storage unit.

7. The data access control method of claim 6, further comprising:
dividing the storage module into the public storage unit and the private storage unit beforehand;
stopping the external device from unauthorized accessing the private storage unit by the storage isolating firmware unit.

8. The data access control method of claim 6, further comprising:
installing some applications in the virtual machine according to the requirements of user beforehand, wherein operating area of the applications correspond to the private storage unit of the storage module.

9. The data access control method of claim 6, further comprising:
when the control module receiving an instruction of the external device access data stored in the public storage unit of the storage module, the SD card direct access unit controlling the external device to access data stored in the public storage unit.

10. The data access control method of claim 6, further comprising:
when the control module receiving a connection instruction of the external contactless device, the SD card communicating with the external contactless device in wireless by the RF communication module.

11. A storage device, comprising:
an interface module;
a storage module comprising:
a public storage unit for storing data without keeping secret;
a private storage unit for storing data kept secret;
a control module connected to the storage module and the interface module, comprising:
a direct access unit for controlling an external device to access data stored in the public storage unit;
a storage isolating firmware unit for stopping the external device from unauthorized accessing the private storage unit; and
a virtual machine operating system unit for installing some applications according to the requirements of user, and performing the applications in a protected mode combined with the storage isolating firmware unit.

12. The storage device of claim 11, further comprising a RF communication module connected to the contol module, processing radio frequency protocol in control of the control module and communicating with an external contactless device in wireless.

13. The storage device of claim 12, wherein the RF communication module is a 2.4G RF communication module or a 13.56M RF communication module.

14. The storage device of claim 13, wherein the RF communication module comprises:
a RF chip connected to the control module and processing the radio frequency protocol; and
a RF antenna connected to the RF chip and communicating with the external contactless in wireless.

15. A access control system of storage device, comprising:
a storage device comprising:
an interface module;
a storage module comprising:
a public storage unit for storing data without keeping secret;
a private storage unit for storing data kept secret;
a control module connected to the storage module and the interface module, comprising:
a direct access unit for controlling an external device to access data stored in the public storage unit;
a storage isolating firmware unit for stopping the external device from unauthorized accessing the private storage unit; and
a virtual machine operating system unit for installing some applications according to the requirements of user, and performing the applications in a protected mode combined with the storage isolating firmware unit;
a host device connected to the interface module for displaying two work interfaces of the storage device, wherein the two work interfaces are a direct access work interface being used for accessing data of the public storage unit and a virtual machine operating system work interface being used for accessing data of private storage unit;
wherein the host device sends an instruction of accessing data stored in the private stored to the storage device by the virtual machine operating system work interface, the virtual machine operating system unit combined with the storage isolating firmware unit authenticates the instruction; if the instruction being pass authentication, the host device will be allowed to access the private storage unit; otherwise, the host machine is not allowed to access the private storage unit.

16. The access control system of storage device of claim 15, further comprising a RF communication module connected to the contol module, processing radio frequency protocol in control of the control module and communicating an external contactless device in wireless.

17. The access control system of storage device of claim 16, wherein the RF communication module is a 2.4G RF communication module or a 13.56M RF communication module.

18. The access control system of storage device of claim 17, wherein the RF communication module comprises:
a RF chip connected to the control module and processing the radio frequency protocol; and
a RF antenna connected to the RF chip and communicating with the external contactless in wireless.
